Europäisches Patentamt

European Patent Office

Office européen des brevets

(19)

(11) Veröffentlichungsnummer: **0 217 133**
**B1**

# (12) EUROPÄISCHE PATENTSCHRIFT

(45) Veröffentlichungstag der Patentschrift:
07.11.90

(21) Anmeldenummer: 86111832.1

(22) Anmeldetag: 27.08.86

(51) Int. Cl.⁵: **G03G 15/16**, G06K 15/16

(54) Andruckvorrichtung für ein bahnförmiges Bildempfangsmaterial.

(30) Priorität: 30.08.85 DE 3531116

(43) Veröffentlichungstag der Anmeldung:
08.04.87 Patentblatt 87/15

(45) Bekanntmachung des Hinweises auf die Patenterteilung:
07.11.90 Patentblatt 90/45

(84) Benannte Vertragsstaaten:
CH DE FR GB IT LI NL SE

(56) Entgegenhaltungen:
DE-A- 2 636 326
DE-C- 3 128 983
JP-A-57 002 782
US-A- 4 392 738

PATENTS ABSTRACTS OF JAPAN, Band 6,
Nr. 179 (P-142)[1057], 14. September 1982; &
JP-A-57 93 375 (HITACHI KOKI K.K.) 10-06-1982

(73) Patentinhaber: Siemens Aktiengesellschaft,
Wittelsbacherplatz 2, D-8000 München 2(DE)

(72) Erfinder: John, Heinz, Dipl.-Ing., Rosenheimer
Landstrasse 124, D-8012 Ottobrunn(DE)
Erfinder: Windele, Josef, Dipl.-Ing., Münchner
Strasse 50a, D-8039 Puchheim(DE)

**Beschreibung**

Die Erfindung betrifft eine Andruckvorrichtung gemäß dem Oberbegriff des Patentanspruches 1.

Eine derartige Andruckvorrichtung ist beispielsweise aus der JP-A 57-2782 bekannt.

Bei nach dem Prinzip der Elektrofotografie arbeitenden Schnelldruckern wie Laserprintern, werden Endlosformulare mit kontinuierlicher Geschwindigkeit bedruckt. Dabei wird an der Umdruckstelle ein auf einem Fotoleiter befindliches Pulverbild auf das Papier übertragen. Das Papier muß zum Bedrucken an die Fotoleitertrommel angeschwenkt werden und mit dieser Kontaktieren, um die Information zu übernehmen. Der Kontakt zwischen Papier und Fotoleiter muß dabei unterbrechbar und wiederherstellbar sein. Zu diesem Zwecke muß die erforderliche Papierzuführeinrichtung folgenden Funktionsanforderungen genügen:

Die Annäherung des Papieres an den Fotoleiter sowie die Unterbrechung des Kontaktes zwischen Fotoleiter und Papier erfolgt während der Fotoleiter und das Papier mit gleicher und gleichförmiger Geschwindigkeit bewegt werden. Diese Vorgänge müssen deshalb sehr schnell ablaufen, da während dieser Phasen kein Pulverbild übertragen werden kann und damit ein nicht bedruckbarer Bereich auf dem Papier entsteht, der möglichst klein gehalten werden soll.

Durch die verlangte Schnelligkeit der Bewegung entstehen Massenkräfte im Papier, die bei der Verwendung von üblichem randgelochtem Endlospapier zum Ausweiten der Transportlochungen führen können. Es besteht deshalb die Forderung, daß nur ein kleines Stück der Papierbahn zum Fotoleiter hin und wieder weg bewegt werden darf. Besonders beim Wiederannähern der Papierbahn an den Fotoleiter nach einer Druckunterbrechung, kommen bereits mit einem Pulverbild versehene betonerte Teile der Papierbahn erneut mit dem bewegten Fotoleiter in Kontakt. Es darf deshalb während des Anschwenkens keine bzw. nur eine sehr geringe Relativbewegung zwischen Papier und Fotoleiter auftreten, weil es sonst zu einem Verwischen des Pulverbildes käme. Auch beim Ablösen der Papierbahn vom Fotoleiter darf eine derartige Relativbewegung nicht auftreten, wenn sich noch betonertes Papier im Bereich des Fotoleiters befindet.

In Schnelldruckern der genannten Art werden in Abhängigkeit von dem Anwendungsgebiet und dem auszudruckenden Text Papierbahnen mit einem Papier von unterschiedlichem Flächengewicht und damit unterschiedlicher Papierstärke verwendet.

Um derartige unterschiedliche Papierstärken ausgleichen zu können, ist es aus der JP-A 57-93375 bekannt, eine einstellbare Papierdicken-Ausgleichseinrichtung vorzusehen.

Bei der bekannten Papierdicken-Ausgleichsvorrichtung ist die Andruckvorrichtung samt der elektromagnetischen Betätigungseinrichtung auf einem einseitig drehbar gelagerten, über eine Exzenterscheibe verschwenkbaren Montageelement befestigt. Durch Verdrehen der Exzenterscheibe wird der Abstand zwischen einem Andruckelement der Andrucksvorrichtung und der Fotoleitertrommel vermindert und damit die Kontaktlänge zwischen Papierbahn und Fotoleitertrommel bei unterschiedlichen Papierstärken ungefähr konstant gehalten.

Aufgabe der Erfindung ist es, eine aufwandsarme Andruckvorrichtung der eingangs genannten Art bereitzustellen, mit der unterschiedliche Stärken des bahnförmigen Bildempfangsmateriales exakt ausgeglichen werden können bzw. eine Voreinstellung der Andruckvorrichtung auf unterschiedliche Stärken des Bildempfangsmateriales möglich ist.

Diese Aufgabe wird bei einer Andruckvorrichtung der eingangs genannten Art gemäß dem kennzeichnenden Teil des ersten Patentanspruches gelöst.

Vorteilhafte Ausführungsformen der Erfindung sind in den abhängigen Ansprüchen gekennzeichnet.

Bei der erfindungsgemäßen Andruckvorrichtung befindet sich das Bildempfangsmateral in an sich bekannter Weise in formschlüssigem Eingriff mit vor und nach der Andruckschiene angeordneten Transportelementen in Form von Traktoren. Dadurch, daß das Bildempfangsmaterial über eine zwischen einem Traktor und der Andruckschiene angeordnete Längenausgleichseinrichtung mit einer Auflagefläche für das Bildempfangsmaterial geführt ist, die mit der Andruckschiene derart gekoppelt ist, daß sie mit der Anlagefläche eine der Schwenkbewegung der Andruckschiene entgegengesetzte Bewegung ausführt und damit die beim An- bzw. Abschwenken der Andruckschiene benötigte bzw. frei werdende Länge des Bildempfangsmaterials freigibt bzw. ausgleicht, ergibt sich ein besonders schonender Transport des Bildempfangsmaterials.

Ein Verwischen des Pulverbildes durch Relativbewegungen in Laufrichtung bzw. durch eine Papierlose im Bereich des Fotoleiters wird dadurch vermieden. Weiterhin ist zwischen einem Transportelement und der Andruckschiene eine einstellbare Papierdicken-Ausgleichseinrichtung vorgesehen, die eine an dem Bildempfangsmaterial anliegende, über eine Verstelleinrichtung an- und abschwenkbare Führungsschiene aufweist. Durch diese Papierdicken-Ausgleichseinrichtung kann die Spannung des Papieres im Bereich der Umdruckstation an unterschiedliche Papierdicken angeglichen werden.

Eine Ausführungsform der Erfindung ist in den Zeichnungen dargestellt und wird im folgenden näher beschrieben. Es zeigen

Fig. 1 eine schematische Schnittdarstellung der Andruckvorrichtung in einem Laserprinter und

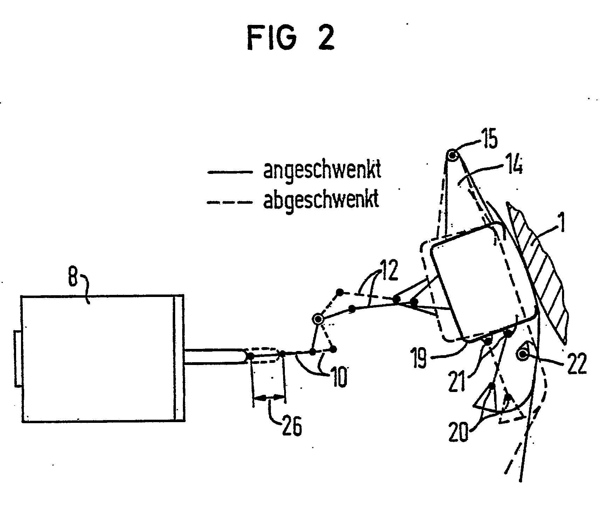

Fig. 2 eine schematische Darstellung der Bewegungen der Andruckschiene mit zugehöriger Längenausgleichseinrichtung, beim An- und Abschwenken.

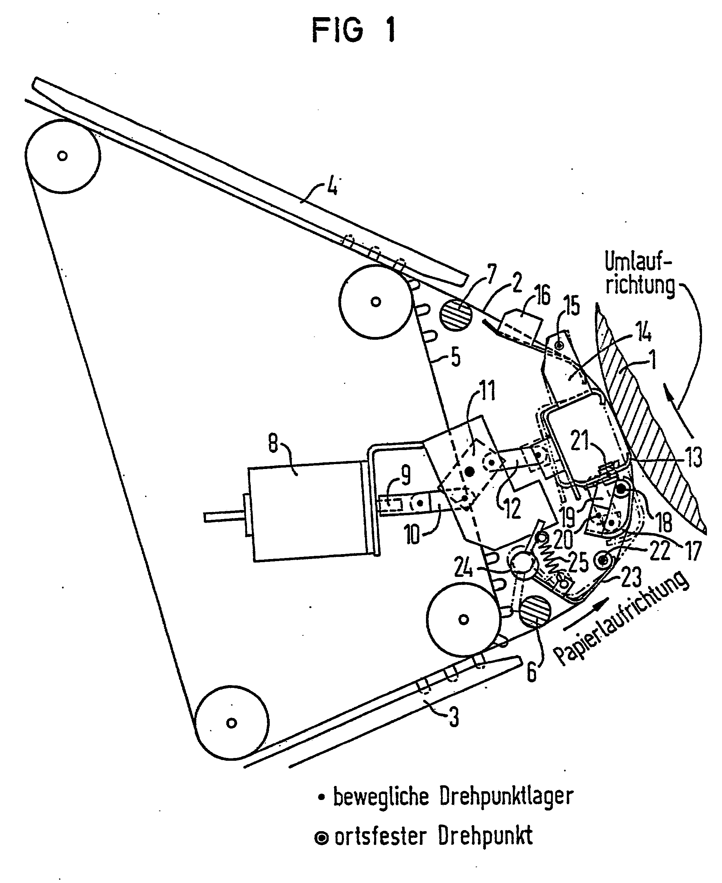

Bei dem in der Fig. 1 schematisch dargestellten Umdruckbereich eines Laserdruckers ist als Zwischenbildträger eine Fotoleitertrommel 1 vorgesehen. Die auf bekannte Weise auf der Oberfläche der Trommel 1 erzeugten Tonerbilder werden in der dargestellten Umdruckstation auf ein bandförmiges Bildempfangsmaterial 2, z.B. eine Papierbahn übertragen. Die Papierbahn weist an ihren Rändern Lochungen auf. Transportiert wird das Bildempfangsmaterial 2 mit Hilfe von zwei miteinander verkoppelten Vorschubraupenpaaren 3 und 4, die in die Randperforation des Bildempfangsmaterials 2 eingreifen. Zu diesem Zwecke sind zwei Traktorenbänder 5 mit aufgesetzten Stiften vorgesehen. Beide Traktorenbänder werden über einen einzigen nicht dargestellten Motor angetrieben. In Bewegungsrichtung des Bildempfangsmaterials gesehen, befindet sich hinter dem unteren Vorschubraupenpaar zunächst eine Papierführungsstange 6, dann eine Papierdicken-Ausgleichseinrichtung, gefolgt von der eigentlichen Andruckvorrichtung, an die sich wiederum eine Papierführungsstange 7 anschließt. Die Andruckvorrichtung zum Andrücken bzw. Abheben des bahnförmigen Bildempfangsmaterials besteht aus einem polarisierten Hubmagneten 8 an dessen beweglichen Bolzen 9 eine Lasche 10 befestigt ist. Die Lasche 10 ist an einer im Druckergehäuse drehbar befestigten Exzenterplatte 11 gelagert, wobei die Exzenterplatte 11 eine weitere Lasche 12 aufnimmt, die mit einer Andruckschiene 13 in Verbindung steht. Die Andruckschiene hat einen im wesentlichen U-förmigen Querschnitt und ist mit Hilfe von zwei seitlich angesetzten Bügelelementen 14 um eine Achse 15 schwenkbar gelagert. Die Achse 15 befindet sich am Anfang eines Führungsbleches 16, für den aus der Übertragungsstation ablaufenden Teil des Bildempfangsmaterials 2. Das insgesamt gebogene Führungsblech 16 ist an dieser Stelle so geneigt, daß das Bildempfangsmaterial 2 bei der in der Fig. 1 mit durchgezogenen Linien gezeichneten Stellung der Andruckschiene wenigstens annähernd tangential aufläuft.

Am unteren Rand der Andruckschiene 13 befindet sich eine Längenausgleichseinrichtung in Form einer Ausgleichsschwinge 17 die einseitig um eine ortsfeste Drehachse 18 am hier nicht dargestellten Gehäuse gelagert ist. An ihrem freien Ende ist an jeder Seite je eine Lasche 19 um die Achse 20 drehbar befestigt, wobei die Lasche 19 selbst wiederum über eine Achse 21 an der Andruckschiene 13 gelagert ist.

Zwischen der Papierführungsstange 6 und dem eigentlichen Umdruckbereich befindet sich eine Papierdicken-Ausgleichseinrichtung aus einer um eine ortsfeste Achse 22 verschwenkbaren Ausgleichsschwinge 23, die mit ihrem freien Ende an einer als Exzenter 24 ausgebildeten Verstelleinrichtung unter Wirkung einer Feder 25 anliegt.

Der Verschwenkungsgrad der Ausgleichsschwinge läßt sich durch Verdrehen des rastbar ausgebildeten Exzenters, mit Hilfe eines hier nicht dargestellten von außen zugänglichen Drehknopfes einstellen, und zwar aus einer mit durchgezogenen Linien dargestellten Position in eine mit gestrichelten Linien dargestellte Position. Wird dickes Papier mit einem Flächengewicht von ca. 120 bis 160 g verwendet, so befindet sich die Ausgleichsschwinge in der in gestrichelt dargestellten eingezogenen Position. Bei der Verwendung von dünnem Papier mit einem Flächengewicht von 60 bis 90 Gramm ist die Ausgleichsschwinge 23 ausgeformt und befindet sich in der mit ausgezogenen Linien dargestellten Position.

Im folgenden wird die Arbeitsweise der Andruckvorrichtung beschrieben:

Beim Verschwenken der Andruckschiene 13 mit Hilfe des Hubmagneten 8 aus der mit ausgezogenen Linien dargestellten angeschwenkten Position in die mit gestrichelten Linien dargestellte abgeschwenkte Position wird die zum An- bzw. Abschwenken benötigte bzw. frei werdende Länge des Bildempfangsmaterials durch die mit der Andruckschiene 13 gekoppelte Ausgleichsschwinge 17 angegeben bzw. ausgeglichen.

Die Geometrie der Andruckschiene 13 bzw. der Ausgleichsschwinge und deren Drehpunktlager 15, 18, 20 und 21 sind so gewählt, daß während der gesamten Schwenkbewegung das Bildempfangsmaterial zwischen den Vorschubraupenpaaren 3 und 4, trotz konstanter Länge immer exakt gespannt bleibt. Die ist unabhängig vom Hub 26 des Hubmagneten 8.

Durch die beschriebene Andruckvorrichtung wird ein Verwischen des Pulverbildes durch Relativbewegung in Laufrichtung bzw. durch eine Papierlose im Bereich des Fotoleiters vermieden.

## Patentansprüche

1. Andruckvorrichtung zum Andrücken bzw. Abheben eines bahnförmigen Bildempfangsmaterials (2) an einen bzw. von einem walzenförmigen Bildträger (1) in einer Tonerbildübertragungsstation eines elektrofotografischen Aufzeichnungs- oder Kopiergerätes mit einer über die Breite des Bildempfangsmaterials reichenden, über eine elektromagnetische Betätigungseinrichtung (8) an- und abschwenkbaren Andruckschiene (13), wobei sich das Bildempfangsmaterial (2) in formschlüssigem Eingriff mit vor und nach der Andruckschiene (13) angeordneten Transportelementen (3, 4) befindet, und das Bildempfangsmaterial (2) über eine zwischen einem Transportelement (3, 4) und der Andruckschiene (13) angeordneten Längenausgleichseinrichtung mit einer Anlagefläche (17) für das Bildempfangsmaterial (2) geführt ist, die mit der Andruckschiene (13) derart gekoppelt ist, daß sie mit der Anlagefläche (17) eine der Schwenkbewegung der Andruckschiene (13) entgegengesetzte Bewegung ausführt und damit die beim An- bzw. Abschwenken der Andruckschiene (13) benötigte bzw. frei werdende Länge des Bildempfangsmaterials freigibt bzw. ausgleicht, dadurch gekennzeichnet, daß zwischen einem Transportelement (3, 4) und der Andruckschiene (13) eine einstellbare Papierdicken-Ausgleichseinrichtung vorgesehen ist, die ein an dem Bildempfangsmaterial (2) anliegendes, über eine Verstelleinrichtung ein- und ausschwenkbares Führungselement (23) aufweist.

2. Vorrichtung nach Anspruch 1, dadurch gekennzeichnet, daß die Papierdicken-Ausgleichseinrichtung eine um eine ortsfeste Drehachse (22) verschwenkbare Dickenausgleichschwinge (23) aufweist, deren freies Ende federgefesselt an einem verstellbaren Exzenterelement (24) anliegt.

3. Vorrichtung nach einem der Ansprüche 1 oder 2, dadurch gekennzeichnet, daß der Verstelleinrichtung eine mit einer Papierdickenskale versehene Einstellscheibe zugeordnet ist.

4. Vorrichtung nach Anspruch 2, dadurch gekennzeichnet, daß ein in Verzahnungen des Exzenterelementes (24) eingreifendes federndes Rastelement (25) vorgesehen ist.

5. Vorrichtung nach einem der Ansprüche 1 bis 4, dadurch gekennzeichnet, daß als Transportelemente in Randlochungen des Bildempfangsmaterials (2) eingreifende Vorschubraupen (3, 4) vorgesehen sind.

## Claims

1. Contact pressure device for pressing and lifting respectively a web-shaped image receiving material (2) against and off from a drum-shaped image carrier (1) in a toner image transfer station of an electrophotographic recording or copying device having a contact pressure rail (13) which extends over the width of the image receiving material and can be swivelled in and out via an electromagnetic actuation device (8), the image receiving material (2) being situated in positive engagement with transport elements (3, 4) arranged before and after the contact pressure rail (13), and the image receiving material (2) being guided over a length compensating device arranged between a transport element (3, 4) and the pressure contact rail (13), said length compensating device having a contact surface (17) for the image receiving material (2) and is coupled to the contact pressure rail (13) in such a way that, with the contact surface (17), it carries out a movement counter to the swivelling movement of the contact pressure rail (13) and thus releases or compensates the length of the image receiving material required or becoming free during the swivelling in and swivelling out respectively of the contact pressure rail (13), characterized in that an adjustable paper thickness compensating device is provided between a transport element (3, 4) and the contact pressure rail (13), said paper thickness compensating device having a guide element (23) which lies against the image receiving material (2) and can be swivelled in and out via an adjustment device.

2. Device according to Claim 1, characterized in in that the paper thickness compensating device has a thickness compensating rocker (23) which can be swivelled around a stationary rotational axis (22), the free end of which rocker lies springshackled against an adjustable cam element (24).

3. Device according to one of Claims 1 or 2, characterized in that an adjustment disc provided with a paper thickness scale is assigned to the adjustment device.

4. Device according to Claim 2, characterized in that a spring-loaded locking element (25) which engages in gearing on the cam element (24) is provided.

5. Device according to one of Claims 1 to 4, characterized in that, as transport elements, feed tractors (3, 4) which engage in margin holes of the image receiving material (2) is provided.

## Revendications

1. Dispositif de pression pour appliquer sous pression un matériau de réception d'images (2) en forme de bande sur un support d'images en forme de cylindre (1) ou l'écarter de ce support d'images dans un poste de transfert d'images de toner d'un appareil d'enregistrement ou de copiage électrophotographique comportant un rail de pression (13), qui s'étend sur la largeur du matériau de réception d'images et peut être rapproché et écarté par pivotement par l'intermédiaire d'un dispositif d'actionnement électromagnétique (8), et dans lequel le matériau (2) de réception d'images est en prise, selon une liaison par formes complémentaires, avec des éléments d'entraînement (3, 4) situés en amont et en aval du rail de pression (13), et le matériau (2) de réception d'images est guidé sur un dispositif de compensation de longueur qui est disposé entre un élément d'entraînement (3, 4) et le rail de pression (13), comporte une surface d'application (17) pour le matériau (2) de réception d'images et est accouplé au rail de pression (13) de telle sorte qu'il exécute, avec la surface d'application (17), un déplacement opposé au mouvement de pivotement du rail de pression (13) et libère ou compense, de ce fait, la longueur du matériau de réception d'images, qui est nécessaire ou devient libre lors du rapprochement ou de l'écartement du rail de pression (13) par pivotement, caractérisé par le fait qu'entre un élément d'entraînement (3, 4) et le rail de pression (13), il est prévu un dispositif de réglage de compensation de l'épaisseur du papier, qui possède un élément de guidage (23), qui s'applique contre le matériau (2) de réception d'images et peut être introduit et ressorti par pivotement par l'intermédiaire d'un dispositif de réglage.

2. Dispositif suivant la revendication 1, caractérisé par le fait que le dispositif de compensation de l'épaisseur du papier possède un bras oscillant de compensation d'épaisseur (23), qui peut pivoter autour d'un axe fixe de rotation (22) et dont l'extrémité libre s'applique, en étant sollicitée par un ressort, contre un élément excentrique réglable (24).

3. Dispositif suivant l'une des revendications 1 ou 2, caractérisé par le fait qu'un disque de réglage pourvu d'une échelle d'épaisseur du papier est associé au dispositif de réglage.

4. Dispositif suivant la revendication 2, caractérisé par le fait qu'il est prévu un élément d'encliquetage élastique (25), qui s'engage dans des dentures de l'élément excentrique (24).

5. Dispositif suivant l'une des revendications 1 à 4, caractérisé par le fait qu'il est prévu, comme éléments d'entraînement, des chenilles d'avancement (3, 4) s'engageant dans des perforations marginales du matériau (2) de réception d'images.

EP 0 217 133 B1

# FIG 1

Umlauf-richtung

Papierlaufrichtung

• bewegliche Drehpunktlager

⊙ ortsfester Drehpunkt

# FIG 2

—— angeschwenkt
-- -- abgeschwenkt